# EUROPEAN PATENT SPECIFICATION

(11) **EP 0 551 362 B1**
(45) Date of publication and mention of the grant of the patent: **18.12.1996**
(21) Application number: 91917673.5
(22) Date of filing: 03.10.1991
(51) Int. Cl.: C09K 3/32, C02F 1/68, B01J 20/24

(54) **METHOD OF ABSORBING HYDROPHOBIC WATER-IMMISCIBLE LIQUIDS**
VERFAHREN ZUR AUFSAUGEN VON HYDROPHOBEN UND IM WASSER UNLÖSLICHEN FLÜSSIGKEITEN
PROCEDE D'ABSORPTION DE LIQUIDES HYDROPHOBES NON MISCIBLES A L'EAU

(30) Priority: 03.10.1990 GB 9021509
(43) Date of publication of application: 21.07.1993
(73) Proprietor: ROBSON, David, James, Anglesey, Gwynedd LL61 6YG (GB); LAWTHER, John, Mark, Bangor, Gwynedd LL57 3YS (GB); HUGHES, Sara, Bangor, Gwynedd LL57 1HS (GB)
(72) Inventor: ROBSON, David, James, Anglesey, Gwynedd LL61 6YG (GB); LAWTHER, John, Mark, Bangor, Gwynedd LL57 3YS (GB); HUGHES, Sara, Bangor, Gwynedd LL57 1HS (GB)
(74) Representative: Atkinson, Peter Birch
(86) International application number: GB9101711
(87) International publication number: WO9206146

(56) References cited:
- EP-A- 0 002 070
- EP-A- 0 094 363
- WO-A-88/10183
- DE-A- 3 423 885
- FR-A- 2 466 564
- US-A- 4 605 640
- US-A- 4 925 343

## Description

The present invention relates to the absorption of hydrophobic water-immiscible liquids, particularly but not exclusively for cleaning-up liquid spillages as well as to materials and products for effecting the absorption of hydrophobic water-immiscible liquids.

A wide variety of hydrophobic water-immiscible liquids absorbents have been used in the past to clean up liquid spillage in water and from around machinery (particularly to clean up oil spillage). These absorbents fall into two main categories: firstly synthetic polymers (e.g. polypropylene) and secondly natural plant based materials such as straw, peat and sawdust. However, both of these categories of materials have their disadvantages. In particular, the synthetic polymers (e.g. polypropylene) are relatively expensive in comparison with plant material whereas plant material itself has a combination of hydrophilic and hydrophobic properties and attracts both water and hydrophobic water-immiscible liquids. An additional disadvantage of these natural products is that they deteriorate during storage.

A further prior proposal made by Midland Silicones (part of DOW Corning) is the use of silanated sawdust to render the sawdust more hydrophobic and more attractive to hydrophobic water-immiscible liquids. The silanated sawdust was particularly developed to absorb oil. This proposal has the disadvantage that silanation is a relatively expensive chemical modification.

A further proposal based on the use of natural products is disclosed in EP-A-0 094 363 which describes a plant material based product specifically as an oil absorbing composition which comprises at least 50% by weight of hydrophobic cellulose pulp blended with 30%-50% of an organic cellulose paper pulp filler. The cellulose pulp is rendered hydrophobic by a conventional non-bonding hydrophobing treatment including inter alia a conventional sizing treatment. However, a disadvantage of the oil absorbing products disclosed in EP-A-0 094 363 is that they only float on water for a limited time.

DE-A-3 423 885 describes the use of solutions of acetylcellulose as an absorptive agent for oil materials.

It is an object of the present invention to obviate or mitigate the abovementioned disadvantages.

According to a first aspect of the present invention there is provided a method of absorbing hydrophobic water-immiscible liquids comprising treating the liquid with solid lignocellulosic plant material which has been modified to render it relatively more absorbent to hydrophobic water-immiscible liquids by esterification of hydroxyl groups in the lignin of the lignocellulose material.

For convenience the solid plant material which has been rendered relatively more attractive to hydrophobic water-immiscible liquids by said esterification is referred to hereinafter as the "modified plant material". The term "plant material" as used herein covers "raw" plant material (possibly formed into a product such as a paper or sheet, e.g. a TMP paper), as well as products obtained by processing of the plant material (e.g. conventionally produced papers).

According to a second aspect of the invention there is provided the use as an absorbent of hydrophobic water-immiscible liquids of solid lignocellulosic plant material which has been rendered relatively more absorbent to hydrophobic water-immiscible liquids by esterification of hydroxyl groups in the lignin of the lignocellulose material.

A third aspect of the invention provides an article for absorbing hydrophobic water-immiscible liquids comprising solid lignocellulosic plant material which has been rendered relatively more attractive to hydrophobic water-immiscible liquids by esterification of hydroxyl groups in the lignin of the lignocellulose material, and a covering material through which the hydrophobic liquid may pass provided around the modified plant material.

A fourth aspect of the invention comprises a sheet of lignocellulosic plant material which has been rendered relatively more attractive to hydrophobic water-immiscible liquids by esterification of hydroxyl groups in the lignin of the lignocellulose material.

Examples of hydrophobic water-immiscible liquids which may be absorbed by the modified plant material are crude and refined oil, solvents such as white spirit, tolulene benzene and pesticide residues.

The plant material used in the invention comprise lignocellulose, which is the collective name given to lignin, cellulose, and hemicellulose.

The plant material is modified by esterification such that the phenolic hydroxyl groups of the lignin and possibly also the hydroxyl groups of the cellulose and the hemicellulose are esterified. Preferably the acid residues in the ester groups are of the formula Alk-C(O)-O in which Alk is an alkyl group of 1-4 carbon atoms. Processes for esterifying lignocellulose in the plant material are already known (see for example EP-A-0 213 252) and such prior processes are suitable for producing modified plant material for use in this invention. Typically the esterification will be effected by treating the plant material with the corresponding anhydride, removing excess anhydride, and then heating the plant material in an oven, eg in the temperature range 90-150°C. The degree of esterification should be sufficient to render the plant material more attractive to hydrophobic water-immiscible liquids whilst still retaining internal hydrogen bonding to maintain the integrity of the material. Usually, the degree of esterification will be such as to provide a 540% weight gain for the plant material. Preferably the weight gain is in the range 12-25%.

The preferred method of esterification is by acetylation since acetic anhydride which is of relatively low cost may be used as the acetylating agent.

The agent used for rendering the plant material more attractive to water-immiscible liquids may be of di-or higher functionality so as to provide a degree of cross-linking.

The preferred plant material used as starting material for modification treatment is lignocellulose in the form of thermomechanically pulped fibre (preferably unbleached) comprising bundles of 3-5 cells so that the individual fibres have a length up to 5mm. Other examples of plant material which may be used include chips, plant stem segments, whole plant stems. Sources of plant material for modification treatment include wood, straw, flax, linseed, bagasse, sisal, jute, kenaf, miscanthus, coir and hemp.

The modified plant materials are eminently suitable for absorption of hydrophobic water-immiscible liquids. In particular, they are capable of absorbing up to 50 times their own weight of hydrophobic water-immiscible liquids from a spillage thereon in water and will retain up to 30 times their own weight when removed from water and allowed to drain. There is the additional advantage that the modified plant material forms a discrete mass of hydrophobic water-immiscible liquid and plant material which floats on clean water whereas untreated plant material forms a mass of hydrophobic water-immiscible liquid and plant material which floats on an emulsified hydrophobic liquid/water mixture. In other words, use of untreated material causes oil to be "dragged" into the water whereas the modified material leaves the water "clean". This has considerable implications for the clean-up of hydrophobic water-immiscible spillages in inland waterways or in areas where environmental protection is important. The chemically modified plant material has the further advantage, over untreated fibres, in that it is less biodegradable and therefore less likely to deteriorate during storage.

The modified plant material may be presented for use in the absorption of hydrophobic water-immiscible liquids in a number of different forms. For example, the modified material may be contained within an outer "covering" through which the liquid may pass. Such a "covering" could for example be a net or porous sheet. It is therefore possible to provide the modified material in the form of a boom or pillow, i.e. a form in which oil absorbents are commonly used for cleaning oil spillages in water. To clean-up an oil-in-water spillage the boom or pillow is simply drawn through the water. Alternatively particulate or fibrous modified material may be spread on to the water surface by dropping from an aircraft. Alternatively, particulate or fibrous modified material can be blown on to the water surface.

It is also possible to provide the modified material in sheet form (eg a paper or fabric). Thus for example a sheet of lignocellulose material may be rendered attractive to hydrophobic water-immiscible liquids by any of the abovementioned treatments (eg acetylation) and used for cleaning up spillages of hydrophobic water-immiscible liquids, particularly spillages from machines or vehicles.

It should however be appreciated that the use of the modified plant material is not restricted to the clean-up of spillages. The modified material could for example be used in filters designed to separate and recover hydrophobic water-immiscible liquids from hydrophobic water-immiscible liquid and water mixtures. Altematively, modified lignocellulose could be used to retain hydrophobic liquids on lignocellulose in moist or wet conditions, for example, for improving the retention of transformer oils on electrical papers and increasing the intervals between oil replacement caused by moisture ingress.

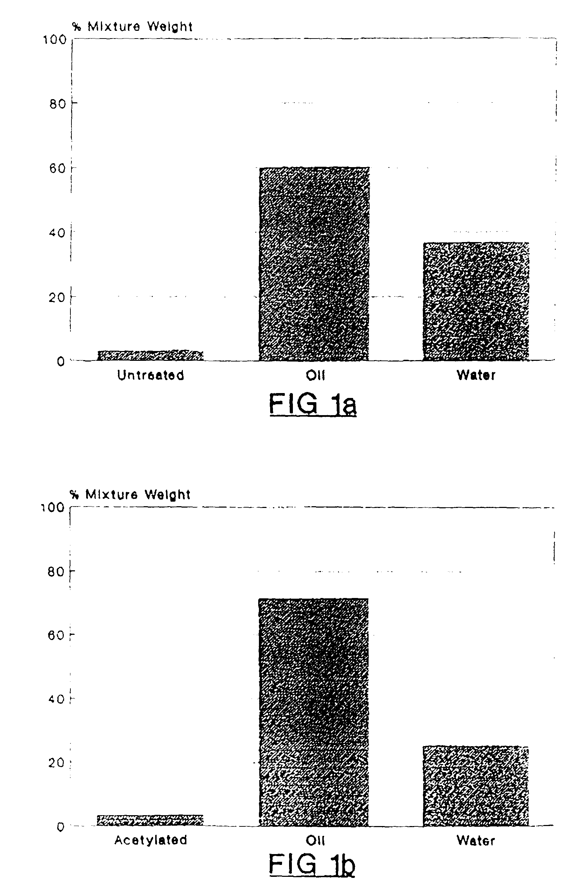

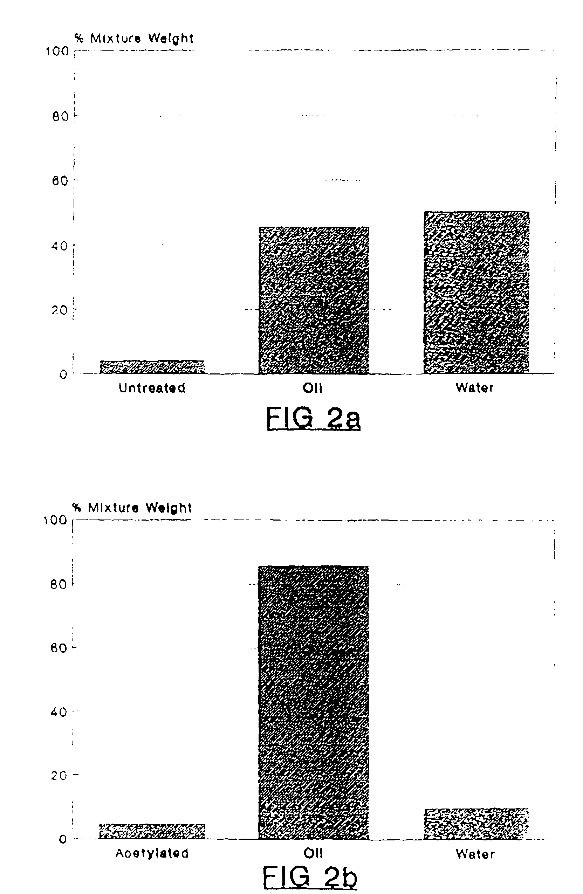

The invention is illustrated by the following non-limiting Examples together with Figs.1 and 2 of the accompanying drawings which are plots of data obtained in Example 2.

### Example 1

### Production of Acetylated Lignocellulose

The method used was similar to that described in Example VII of EP-A-0 2213 262. Spruce thermomechanical fibre pulp (TMP) was dipped for 1 minute in liquid acetic anhydride. Excess anhydride was squeezed out from the pulp by applying mechanical compression forces to the material yielding an acetic anhydride to fibre pulp ratio of 2.5 w/w. The impregnated pulp was then heated at 120° C for different times. After the reaction a vacuum was applied. The fibre pulp was then air conditioned. The results are shown in Table 1.

**Table 1**

| Sample | Reaction Time at 120° C (hours) | Weight gain due to acetylation (%) |
|---|---|---|
| Spruce TMP | 0.5 | 11.7 |
| | 1.0 | 22.4 |
| | 2.0 | 24.8 |
| | 4.0 | 36.5 |

### Example 2

### Removal of Oil from Sea-Water (Laboratory Test)

This Example demonstrates the removal of Medium Fuel Oil (MFO) and Transformer Oil (Class 1 uninhibited mineral insulating oil) using modified lignocellulose. The modified lignocellulose used was thermo-mechanically pulped wood fibre acetylated in accordance with the method described in Example 1 above and with an acetyl weight gain of between 17% and 20%, and the sea-water was collected from the Irish Sea off Anglesey.

The method used was an adaptation of that described in Example 1 of EP-A-0 094 363. Briefly this adapted method was as follows: 5gms of the modified lignocellulose fibre were mixed with 200 ml of medium fuel oil or transformer oil, and 200 ml of water. The mixture was stirred for 5 minutes using a magnetic stirrer. The mixture was allowed to stand for 5 minutes then poured through a screen. The liquid-containing absorption agent collected on the screen and was allowed to drain for 5 minutes. The procedure was repeated using untreated fibres.

The liquid-containing fibre was weighed and the ratio of liquid to fibre weight calculated. The results are shown in Table 2. Additionally, the oil/water mixture recovered from the screening process was analysed to determine the relative proportions of the oil and water. From this information relative weights of the fibre, oil and water in the liquid containing fibre was calculated. The results obtained for MFO are shown in Fig. 1 and those for Transformer Oil are shown in Fig. 2.

**Table 2**

| | OIL/WATER WEIGHT GAIN BY FIBRES (multiple of initial fibre weight) | |
|---|---|---|
| | MFO | Transformer Oil |
| ACETYLATED FIBRE | 28.1 | 20.3 |
| UNTREATED FIBRE | 30.8 | 22.4 |

As shown in Table 2 the overall weight gain by untreated and acetylated fibres was similar.

It was however found that the oil uptake of the acetylated fibres was greater than for the untreated fibre, as seen by reference to the drawings.

Fig. 1 illustrates the results obtained using untreated fibre whereas Fig. 1b shows the results for acetylated fibre. A comparison of Figs. 1a and 1b shows that the liquid absorbed by the acetylated fibres comprised a greater percentage of MFO than the untreated fibres. More particularly, about 70% of the liquid absorbed by the treated fibre was MFO in comparison to about 60% as absorbed by the untreated fibres. It will be seen from Fig. 2 that the difference was more substantial in the case of transformer oil for which the liquid absorbed by the acetylated fibres (Fig. 2b) comprised above 80% oil in comparison with a figure of about 45% for the untreated fibres (Fig. 2b).

### Example 3

### Flotation trails in sea-water.

Acetylated fibre as used in Example 2 and untreated fibre were separately floated on sea-water. Untreated fibre sank completely in sea-water after 2 days. Acetylated fibre started to sink in sea-water after 5 days. A slowly reducing proportion of the acetylated fibre continued to float for up to a month.

Acetylated fibre which had previously absorbed Medium Fuel Oil floated on sea-water for at least two months.

### Example 4

### Effect on water quality.

The effect of the absorption of oil by the untreated and acetylated fibres on water quality below the main fibre mass was assessed using Methods 1 and 2 below. The acetylated fibres used as in Example 2.

### Method 1. Extraction and Weight Measurement.

Fibres were mixed with oil and sea water in the ratio 5 gm fibres:100 ml Medium Fuel Oil:100 ml sea-water. A water sample from below the main fibre/oil mass was taken in a 100 ml syringe. The oil was extracted from the sea-water by mixing with 100 ml of chloroform. Sea-water was used as a control. The chloroform was separated from the water and samples of the chloroform evaporated. The weight of the remaining residue, expressed as a percentage of the chloroform sample, was:

| | |
|---|---|
| untreated fibre | 0.098% |
| acetylated fibre | 0.006% |
| sea-water control | 0.010% |

Approximately 1.5% of the 100 ml of Medium Fuel Oil stirred into the untreated fibre/oil/seawater mixture is emulsified by the untreated fibres. A significantly lower amount was emulsified by the acetylated fibres.

### Method 2. Extraction and UV Absorption.

UV peak absorbance of the chloroform extract obtained in Method 1 was 100 times greater for the extract from the untreated fibre mixture than for the extract from the acetylated fibre mixture. Water recovered from screening 200 ml Transformer Oil, 200 ml water and 5 gm fibre showed a UV peak absorbance over 25 times greater from the untreated fibre mixture than from the acetylated fibre mixture.

### Example 5

### Removal of White Spirit from Deionised Water.

The method was adapted from Example 1 of EP-A-0 094 363. Briefly this adapted method was as follows: 5 gms of acetylated fibre (acetyl weight gain 14-17%) were mixed with 200 ml of white spirit and 200 ml of deionised water. The mixture was stirred for 5 minutes using a rotary stirrer. The mixture was allowed to stand for 5 minutes and then poured through a screen. The liquid containing absorption agent collected on the screen was allowed to drain for 5 minutes. The liquid containing fibre was weighed and the ratio of liquid to fibre weight calculated, and the results are shown in Table 3.

**TABLE 3**

| | WHITE SPIRIT/WATER WEIGHT GAIN BY FIBRES |
|---|---|
| | (multiple of initial fibre weight) |
| ACETYLATED FIBRE | 15.7 |
| UNTREATED FIBRE | 17.9 |

The remaining white spirit and water which had not been absorbed by the fibre was collected, separated and the water and white spirit fractions weighed. From the weights of these fractions the uptake of the water by the fibre and the uptake of white spirit by the fibre were calculated. These values (expressed as a percentage of the total uptake) are shown below in Table 4.

**TABLE 4**

| | WATER UPTAKE (%) | WHITE SPIRIT UPTAKE (%) |
|---|---|---|
| ACETYLATED FIBRE | 19 | 81 |
| UNTREATED FIBRE | 63 | 37 |

## Claims

1. A method of absorbing hydrophobic water-immiscible liquids comprising treating the liquid with solid lignocellulosic plant material which has been modified to render it relatively more absorbent to hydrophobic water-immiscible liquids by esterification of hydroxyl groups in the lignin of the lignocellulose material.

2. A method as claimed in claim 1 wherein the esterified material has a weight gain of 5-40% as compared to the unesterified material.

3. A method as claimed in claim 2 wherein the weight gain is 12 to 25%.

4. A method as claimed in any one of claims 1 to 3 wherein the acid residues in the esterified material are of the formula Alk-C-(O)-O in which Alk is an alkyl group of 1 to 4 carbon atoms.

5. A method as claimed in claim 4 wherein the esterification is acetylation.

6. A method as claimed in any one of claims 1 to 5 wherein the lignocellulose is thermomechanically pulped fibre.

7. A method as claimed in any one of claims 1 to 5 wherein the lignocellulose comprises plant material chips, plant stem segments and/or whole plant stems.

8. A method as claimed in any one of claims 1 to 5 wherein the source of the lignocellulose is selected from wood, straw, flax, linseed, bagasse, sisal, jute, kenaf, miscanthus, coir, and hemp.

9. A method as claimed in any one of claims 1 to 8 wherein the water-immiscible liquid is an oil.

10. A method as claimed in claim 9 wherein the oil is an oil spillage in water.

11. A method as claimed in claim 10 wherein the modified plant material is spread on to the surface of the water.

12. A method as claimed in claim 10 which comprises drawing through the oil an article which comprises the modified plant material within an outer covering through which the oil may pass.

13. A method as claimed in any one of claims 1 to 8 wherein the water-immiscible liquid is an organic solvent or a pesticide residue.

14. A method as claimed in any one of claims 1 to 8 for the filtration or removal of a hydrophobic water-immiscible liquid from a mixture of such a liquid with water.

15. A method as claimed in any one of claims 1 to 8 for the retention of transformer oil on a paper.

16. A method of absorbing hydrophobic water-immiscible liquids comprising treating the liquid with solid lignocellulose material which has been modified to render it relatively more absorbent to hydrophobic water-immiscible liquids by esterification of hydroxyl groups in the lignin of the lignocellulose material.

17. The use as an absorbent of hydrophobic water-immiscible liquids of solid lignocellulosic plant material which has been rendered relatively more absorbent to hydrophobic water-immiscible liquids by esterification of hydroxyl groups in the lignin of the lignocellulose material.

18. An article for absorbing hydrophobic water-immiscible liquids comprising lignocellulosic plant material which has been rendered relatively more attractive to hydrophobic water-immiscible liquids by esterification of hydroxyl groups in the lignin of the lignocellulose material, and a covering material through which the hydrophobic liquid may pass provided around the modified plant material.

19. An article as claimed in claim 18 in the form of a boom or pillow.

20. A sheet of lignocellulosic plant material which has been rendered relatively more attractive to hydrophobic water-immiscible liquids by esterification of hydroxyl groups in the lignin of the lignocellulose material.

21. An article or sheet as claimed in claim 19 or 20 comprising acetylated lignocellulose.

## Patentansprüche

1. Methode zum Absorbieren hydrophober, mit Wasser nicht mischbarer Flüssigkeiten, bestehend aus der Behandlung der Flüssigkeit mit festem pflanzlichem Lignocellulosematerial, das durch Veresterung von Hydroxygruppen im Lignin des Lignocellulosematerials modifiziert worden ist, um es für hydrophobe, mit Wasser nicht mischbare Flüssigkeiten relativ absorptionsfähiger zu machen.

2. Methode nach Anspruch 1, bei der das veresterte Material im Vergleich mit dem nichtveresterten Material eine Gewichtszunahme von 5-40% aufweist.

3. Methode nach Anspruch 2, bei der die Gewichtszunahme 12 bis 25% beträgt.

4. Methode nach einem der Ansprüche 1 bis 3, bei der die Säurerückstände im veresterten Material die Formel Alk-C-(O)-O aufweisen, wobei Alk eine Alkylgruppe mit 1 bis 4 Kohlenstoffatomen ist.

5. Methode nach Anspruch 4, bei der die Veresterung eine Acetylierung ist.

6. Methode nach einem der Ansprüche 1 bis 5, bei der es sich bei der Lignocellulose um einen thermomechanisch aufgeschlossenen Faserstoff handelt.

7. Methode nach einem der Ansprüche 1 bis 5, bei der die Lignocellulose Schnitzel von pflanzlichem Material, Teile von Pflanzenstengeln und/oder ganze Pflanzenstengel umfaßt.

8. Methode nach einem der Ansprüche 1 bis 5, bei der die Lignocellulosequelle unter Holz, Stroh, Flachs, Leinsamen, Bagasse, Sisal, Jute, Kenaf, Stielblütengras, Kokosfaser und Hanf ausgewählt wird.

9. Methode nach einem der Ansprüche 1 bis 8, bei der es sich bei der mit Wasser nicht mischbaren Flüssigkeit um ein Öl handelt.

10. Methode nach Anspruch 9, bei der es sich bei dem Öl um ein Ölleck in Wasser handelt.

11. Methode nach Anspruch 10, bei der das modifizierte pflanzliche Material auf der Wasseroberfläche ausgebreitet wird.

12. Methode nach Anspruch 10, welche das Durchziehen durch das Öl eines Artikels umfaßt, der aus dem modifizierten pflanzlichen Material mit einer Außenhülle, durch die das Öl durchfließen kann, besteht.

13. Methode nach einem der Ansprüche 1 bis 8, bei der die mit Wasser nicht mischbare Flüssigkeit ein organisches Lösungsmittel oder ein Pestizidrückstand ist.

14. Methode nach einem der Ansprüche 1 bis 8 zum Abfiltrieren oder Entfernen einer hydrophoben, mit Wasser nicht mischbaren Flüssigkeit von einer Mischung einer solchen Flüssigkeit mit Wasser.

15. Methode nach einem der Ansprüche 1 bis 8 zum Zurückhalten von Transformatorenöl auf einem Papier.

16. Methode zum Absorbieren hydrophober, mit Wasser nicht mischbarer Flüssigkeiten, bestehend aus der Behandlung der Flüssigkeit mit festem Lignocellulosematerial, das durch Veresterung von Hydroxygruppen im Lignin des Lignocellulosematerials modifiziert worden ist, um es für hydrophobe, mit Wasser nicht mischbare Flüssigkeiten relativ absorptionsfähiger zu machen.

17. Anwendung von festem pflanzlichem Lignocellulosematerial, das durch Veresterung von Hydroxygruppen im Lignin des Lignocellulosematerials für hydrophobe, mit Wasser nicht mischbare Flüssigkeiten relativ absorptionsfähiger gemacht worden ist, als Absorptionsmittel für hydrophobe, mit Wasser nicht mischbare Flüssigkeiten.

18. Artikel für das Absorbieren hydrophober, mit Wasser nicht mischbarer Flüssigkeiten, bestehend aus pflanzlichem Lignocellulosematerial, das durch Veresterung von Hydroxygruppen im Lignin des Lignocellulosematerials für hydrophobe, mit Wasser nicht mischbare Flüssigkeiten relativ anziehungsfähiger gemacht worden ist, und aus einem Umhüllungsmaterial, durch das die hydrophobe Flüssigkeit strömen kann, und das um das modifizierte pflanzliche Material herum angebracht ist.

19. Artikel nach Anspruch 18 in Form einer Sperre oder eines Kissens.

20. Bahn aus pflanzlichem Lignocellulosematerial, welches durch Veresterung von Hydroxygruppen im Lignin des Lignocellulosematerials für hydrophobe, mit Wasser nicht mischbare Flüssigkeiten relativ anziehungsfähiger gemacht worden ist.

21. Artikel oder Bahn nach Anspruch 19 oder 20, der bzw. die acetylierte Lignocellulose enthält.

## Revendications

1. Procédé d'absorption de liquides hydrophobes non miscibles à l'eau, comprenant le traitement du liquide avec une matière végétale lignocellulosique solide qui a été modifiée pour la rendre relativement plus absorbante à des liquides hydrophobes non miscibles à l'eau par estérification des groupes hydroxyle dans la lignine de la matière de lignocellulose.

2. Procédé selon la revendication 1, dans lequel la matière estérifiée manifeste un gain de poids de 5-40% par rapport au poids de la matière non estérifiée.

3. Procédé selon la revendication 2, dans lequel le gain de poids représente de 12 à 25 %.

4. Procédé selon l'une quelconque des revendications 1 à 3, dans lequel les résidus acides dans la matière estérifiée répondent à la formule Alk-C-(O)-O dans laquelle Alk représente un groupe alkyle contenant de 1 à 4 atomes de carbone.

5. Procédé selon la revendication 4, dans lequel l'estérification est une acétylation.

6. Procédé selon l'une quelconque des revendications 1 à 5, dans lequel la lignocellulose est de la fibre transformée en pâte par voie thermomécanique.

7. Procédé selon l'une quelconque des revendications 1 à 5, dans lequel la lignocellulose comprend des copeaux de matière végétale, des segments de tiges de plantes et/ou des tiges de plantes complètes.

8. Procédé selon l'une quelconque des revendications 1 à 5, dans lequel la source de la lignocellulose est choisie parmi le bois, la paille, le lin, les graines de lin, la bagasse, le sisal, le jute, le chanvre de Madras, le miscanthe, le coir et le chanvre.

9. Procédé selon l'une quelconque des revendications 1 à 8, dans lequel le liquide non miscible à l'eau est une huile.

10. Procédé selon la revendication 9, dans lequel l'huile est une pollution d'huile dans de l'eau.

11. Procédé selon la revendication 10, dans lequel on étale la matière végétale modifiée à la surface de l'eau.

12. Procédé selon la revendication 10, qui comprend le fait de tirer à travers l'huile un article qui comprend la matière végétale modifiée à l'intérieur d'une enveloppe externe à travers laquelle l'huile peut passer.

13. Procédé selon l'une quelconque des revendications 1 à 8, dans lequel le liquide non miscible à l'eau est un solvant organique ou un résidu de pesticide.

14. Procédé selon l'une quelconque des revendications 1 à 8, pour la filtration ou l'élimination d'un liquide hydrophobe non miscible à l'eau à partir d'un mélange d'un tel liquide avec de l'eau.

15. Procédé selon l'une quelconque des revendications 1 à 8, pour la rétention d'huile isolante sur du papier.

16. Procédé d'absorption de liquides hydrophobes non miscibles à l'eau, comprenant le fait de traiter le liquide avec une matière solide de lignocellulose qui a été modifiée pour la rendre relativement plus absorbante à des liquides hydrophobes non miscibles à l'eau par estérification des groupes hydroxyle dans la lignine de la matière de lignocellulose.

17. Utilisation, comme absorbant de liquides hydrophobes non miscibles à l'eau, d'une matière végétale lignocellulosique solide qui a été rendue relativement plus absorbante à des liquides hydrophobes non miscibles à l'eau par estérification des groupes hydroxyle dans la lignine de la matière de lignocellulose.

18. Article pour absorber des liquides hydrophobes non miscibles à l'eau, comprenant une matière végétale lignocellulosique qui a été rendue relativement plus attractive à des liquides hydrophobes non miscibles à l'eau par estérification des groupes hydroxyle dans la lignine de la matière de lignocellulose, et une matière d'enveloppe à travers laquelle le liquide hydrophobe peut passer prévue autour de la matière végétale modifiée.

19. Article selon la revendication 18, sous la forme d'un barrage antipollution ou d'un coussin.

20. Feuille de matière végétale lignocellulosique qui a été rendue relativement plus attractive pour des liquides hydrophobes non miscibles à l'eau par estérification des groupes hydroxyle dans la lignine de la matière lignocellulosique.

21. Article ou feuille selon la revendication 19 ou 20, comprenant de la lignocellulose acétylée.
